# EUROPEAN PATENT APPLICATION

(11) **EP 4 830 953 A1**
(43) Date of publication of application: **28.10.2026**
(21) Application number: 25171893.8
(22) Date of filing: 23.04.2025
(51) Int. Cl.: B60H 1/32, F04B 39/00, F04B 39/12, F04B 39/14, B60H 1/00

(54) **HEAT PUMP MODULE WITH DECOUPLING ELEMENTS**

(71) Applicant: Valeo Electrification, 95892 Cergy Pontoise (FR)
(72) Inventor: FIENE, Andreas, 96476 Bad Rodach (DE); MUHR, Sebastian, 96476 Bad Rodach (DE); SESHA-SAI, Lohith-Sriram-Pavan, 600130 Chennai (IN); KANAGARAJ, Dhineshkumar, 600130 Chennai (IN); BENNOUNA, Saad, 78322 Le Mesnil-Saint-Denis Cedex (FR)
(74) Representative: Valeo Powertrain Systems

(57) **Abstract**

Heat pump module for a vehicle, having an envelope comprising an upper casing and a bottom casing joining each other along a contact surface and defining an internal area, a compression unit (10) disposed in the internal area, comprising N mount legs (20), each extending outwardly from an outer surface (15) of the compression unit (10) and comprising an upper surface (20-1) facing a lower surface (521) of the upper casing and a bottom surface (20-2) facing a top surface (522) of the bottom casing, N being a natural number greater than or equal to three, wherein for each of the N mount legs (20), one decoupling element (550) extends between said mount leg (20) and the envelope.

## Description

### TECHNICAL FIELD

The invention relates in general to the technical field of refrigerant heat pump systems, and concerns in particular a heat pump module including decoupling elements.

In hybrid and electric vehicles, a refrigerant heat pump system contributes to the cooling and heating of the interior of the vehicle but also the cooling and heating of the battery. Such a refrigerant heat pump system operates thanks to an electrical compressor. Air or a refrigerant is fed to the compressor, the compressor compresses it and subsequently discharges it. The main component of a refrigerant heat pump system is the compressor required to compress the refrigerant. The compressor is lodged into a casing made in two parts, for example in plastic. Such a refrigerant heat pump module is typically attached to the vehicle chassis. It raises various problems.

The compressor is a source of vibrations when running. These vibrations constitute noise generated by their transmission to the vehicle on which the refrigerant heat pump module is installed.

Noise associated with the vibrations from the refrigerant heat pump module should be reduced as much as possible. For that purpose, there are various existing solutions.

One of them is the use of damper elements. For example, one damper element may be firmly screwed to the chassis of the vehicle, and another damper element may be fixed to the housing of the refrigerant heat pump module.

Also, it is known to use an acoustic layer, typically made of foam, to reduce the noise produced by the compressor and to physically isolate the compressor from its casing. The acoustic layer surrounds the compressor and the assembly made of the compressor and the acoustic layer is disposed into the casing. The two parts of the casing are screwed or clipped together.

Therefore, the compressor does not come into direct contact with the two-part casing and its weight is carried by the acoustic layer.

Nevertheless, over the lifetime of the heat pump module and/or in some operating conditions, the foam of the acoustic layer will undergo stress like temperatures up to 165°C, or even more, and/or mechanical stress due to the mass of the compressor and/or further to its vibrations during operation and/or due to mechanical vibration when the vehicle is driving on roads with a bad quality surfacing.

In order to resist to such stringent mechanical stress, a specific foam may be used to form the acoustic layer, so as to reach a high acoustic damping of the compressor noise. Such a foam is unfortunately not designed to undergo high temperatures. It results in a shrinkage of the foam over the lifetime of the heat pump module and a premature aging of the foam, thereby leading to a reduction of the elasticity of the acoustic layer. Finally the compressor may lose its safe position inside the acoustic layer and the casing.

The invention aims to overcome all or some of the abovementioned problems by proposing a heat pump module with a particular arrangement of decoupling elements to absorb vibrations of the compressor while overcoming the problems linked to the high temperatures that may arise from the compressor.

### GENERAL DEFINITION OF THE INVENTION

To this end, one subject of the invention is a heat pump module for a vehicle, characterized in that it comprises:
- an envelope comprising an upper casing and a bottom casing joining each other and defining an internal area,
- a compression unit disposed in the internal area, comprising N mount legs, each extending outwardly from an outer surface of the compression unit and comprising an upper surface facing a lower surface of the upper casing and a bottom surface facing a top surface of the bottom casing, N being a natural number greater than or equal to two, preferably greater than or equal to three,
- for each of the N mount legs, one decoupling element, preferably at least partly made of an elastomer material, for example rubber, extending between said mount leg and the envelope.

The envelope defines an internal space in which the compression unit is placed. In other words, the envelope is an accommodation for the compression unit and a protective shell against external shocks or humidity.

When in use, the compression unit is placed inside the envelope and is entirely wrapped by the envelope. The compression unit is therefore protected from all aggressions, for example external shocks, humidity, or dust.

According to an optional feature of the invention, the sealing of the upper casing and the bottom casing is performed along a contact surface when the casings are joined. The casings may join in a plane, or the casings may join according to one plane for a part of them and according to a second plane for another part of them. As an alternative, the contact surface may be curved. The casings have complementary forms, so as to be in contact when the upper casing and the bottom casing are joined to form a fully closed envelope.

Thanks to the features of the invention, the compression unit extends further in the form of two or more, preferably three or more, mount legs on which decoupling elements are placed. The upper casing and the bottom casing comprise each surfaces facing the mount legs. These surfaces are in contact with the decoupling elements. It follows that each decoupling element is pressed between a surface of the mount leg and the corresponding surface of the casing facing the mount leg. This arrangement offers a plurality of advantages. The compression unit is not in a direct physical contact with the envelope. The compression unit is functionally connected with the envelope through the decoupling elements. The decoupling elements take the main part of mechanical stress exerted from the compression unit. Due to their positioning on the mount legs, the decoupling elements are spaced apart from the hot part of the compression unit. The decoupling elements are not exposed to high temperatures, thereby leading to a marginal deterioration over time.

According to an optional feature of the invention, the envelope is made of plastic. Such an envelope is easy to produce thanks to well-controlled injection moulding processes. Furthermore, it results in a light-weight casing having lower costs compared with a metal casing. Alternatively, the envelope is made of composite material, such as organosheet. Such a material offers a combination of strength, flexibility and lightness, and feature a high strength-to-weight ratio.

The envelope is obtained by joining the upper casing and the bottom casing along the contact surface. The casings may be bolted together or held together by particular fixation means through the decoupling elements. According to an optional feature of the invention, in an ingenious way, the decoupling elements are each fixed to one casing (upper or bottom casing) and the decoupling elements are also a fixation seat for joining the upper and bottom casing to each other. It leads to a fully closed envelope encapsulating the compression unit. The fully closed envelope pushes on each decoupling element towards the mount leg. It leads to a compression unit that is stable inside the envelope while it has no direct contact with the envelope, as the decoupling elements play the intermediate between the mount legs of the compression unit and the envelope. The vibrations from the compression unit are absorbed by the decoupling elements.

According to an optional feature of the invention, the heat pump module comprises an acoustic layer, typically 15 to 30 mm thick, disposed between the compression unit and the envelope, said acoustic layer comprising N apertures through which the N mount legs extend.

The acoustic layer may be composed of foam.

Thanks to the acoustic layer, the compression unit does not form any direct contact with the envelope. The acoustic layer absorbs the high frequencies when the compression unit is running. It can contribute to a noise reduction of the order of 10% compared with solutions without any acoustic layer.

In an optional feature of the invention, the acoustic layer is press fitted onto the compression unit. The acoustic layer has the external form of the compression unit and fits perfectly on the compression unit. In other words, the outer surface of the compression unit and the inner skin of the acoustic layer are mostly identical. It should be understood that the distance between the outer skin of the compression unit and the inner skin of the acoustic layer is a few millimeters at most.

As it will appear further to the detailed description of the invention, the superposition of a mount leg and decoupling elements enables to get the decoupling elements away from the compression unit which is a source of high temperatures. As the vibrations are absorbed by the decoupling elements, it makes it possible to consider other types of foam for the acoustic layer. Indeed, the foam does not need to resist to the vibrations. The composition of the acoustic layer can therefore be chosen only in focus of its acoustic properties.

Due to aging, the acoustic layer may shrink. Thanks to the invention, it is ensured that the compression unit remains in its position inside the envelope through the decoupling elements. Decoupling elements have a double function of absorbing vibrations and contributing, together with the mount legs, to maintain the compressor unit in its working position.

According to an optional feature of the invention, each decoupling element comprises a first decoupling part pressed between the upper surface and the lower surface of the upper casing and a second decoupling part being pressed against the bottom surface and the top surface of the bottom casing.

According to an optional feature of the invention, the heat pump module comprises fixation means arranged to secure each decoupling part to the envelope.

According to an optional feature of the invention, at least one of the N mount legs comprises, for each of its upper surface and bottom surface, a blind hole opening onto said surface, each of the blind hole accommodating either the first decoupling part or the second decoupling part press-fitted in said blind hole.

According to an optional feature of the invention, each of the first and second decoupling parts comprises a body and a head connected to the body, the body extending in the blind-hole in which said decoupling part is accommodated and the head being compressed between the envelope and the surface onto which said blind-hole opens.

According to an optional feature of the invention, the body is in an elastomer material, for example rubber, and the head is in metal or an elastomer material, for example rubber.

According to an optional feature of the invention, the first decoupling part is fixed to the lower surface of the upper casing and the second decoupling part is fixed to the top surface of the bottom casing.

According to an optional feature of the invention, the decoupling parts are overmolded in the envelope. The first decoupling parts are overmolded in the upper casing and the second decoupling parts are overmolded in the bottom casing. These features reduces the number of parts to be handled when assembling the heat pump module. As the decoupling parts are overmolded in the casings of the envelope, no additional fixation means are required. This makes the assembly process particularly efficient.

According to an optional feature of the invention, at least one of the N mount legs comprises a channel extending from the upper surface to the bottom surface of said mount leg, each of the first and second decoupling parts comprises a through-hole, each of the lower surface of the upper casing and the top surface of the bottom casing, comprises one opening, and the heat pump module comprises, for said at least one of the N mount legs, fixation means inserted through the channel of said mount leg, the through-hole of the first and second decoupling parts and the openings of the he lower surface of the upper casing and the top surface of the bottom casing, so as to fix the upper casing, the top surface, the decoupling elements and said mount leg together.

These optional features of the invention offer the advantages of combining a plurality of technical functions: on top of providing vibration absorption through the decoupling elements and free the acoustic layer from the constraints of taking the mechanical stress, the mount legs and the decoupling elements having each a through-hole enable to operate the fixing of the upper casing to the bottom casing. In other words, one fixation means enables to close the envelope while fixing the decoupling elements to the mount legs. It results in a reduced number of parts to handle, an ease of assembly and ensures the compactness of the heat pump module.

### BRIEF DESCRIPTION OF THE FIGURES

Further features, details and advantages of the invention will become apparent upon reading the description given with reference to the appended drawings, which are given by way of example and in which:
[Fig. 1] represents a compression unit of a heat pump module according to the invention,
[Fig. 2] represents the compression unit of figure 1 with an acoustic layer according to the heat pump module of the invention,
[Fig. 3] represents a heat pump module of the invention,
[Fig. 4] represents a cut view of a part of the heat pump module of the invention,
[Fig. 5] schematically represents variants of decoupling elements of the heat pump module of the invention.

### DETAILED DESCRIPTION

The characteristics, variants and various embodiments of the invention, as they have been described or as they will be presented in the detailed description which follows, can be associated with each other, according to various combinations, to the extent that they are not incompatible or exclusive with respect to each other. In particular, it will be possible to imagine variants of the invention comprising only a selection of characteristics described subsequently isolated from the other characteristics described, if this selection of characteristics is sufficient to confer a technical advantage and/or to differentiate the invention compared to the prior art.

For the sake of clarity, the same elements are designated by the same references in the different figures.

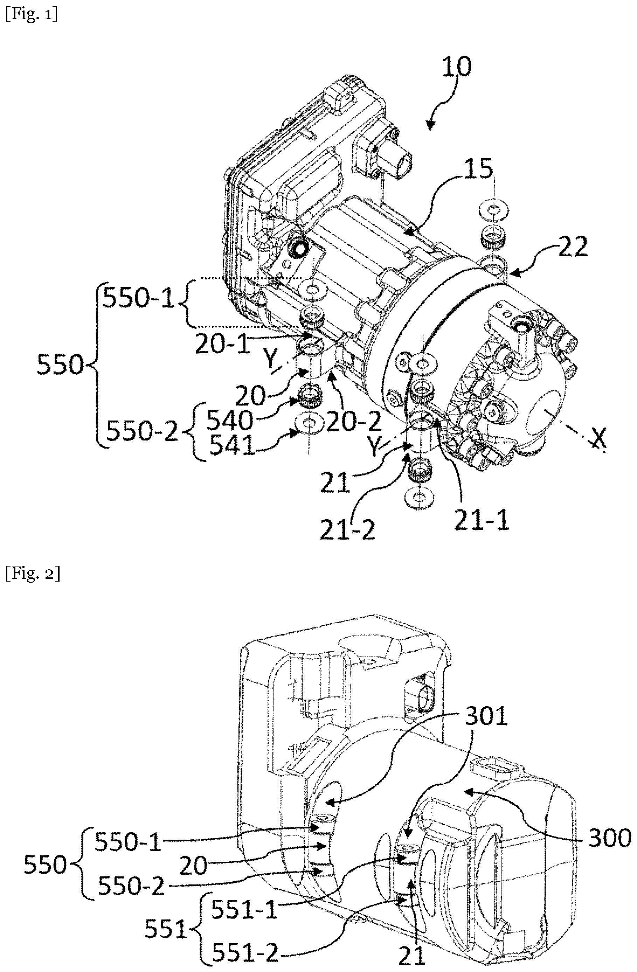

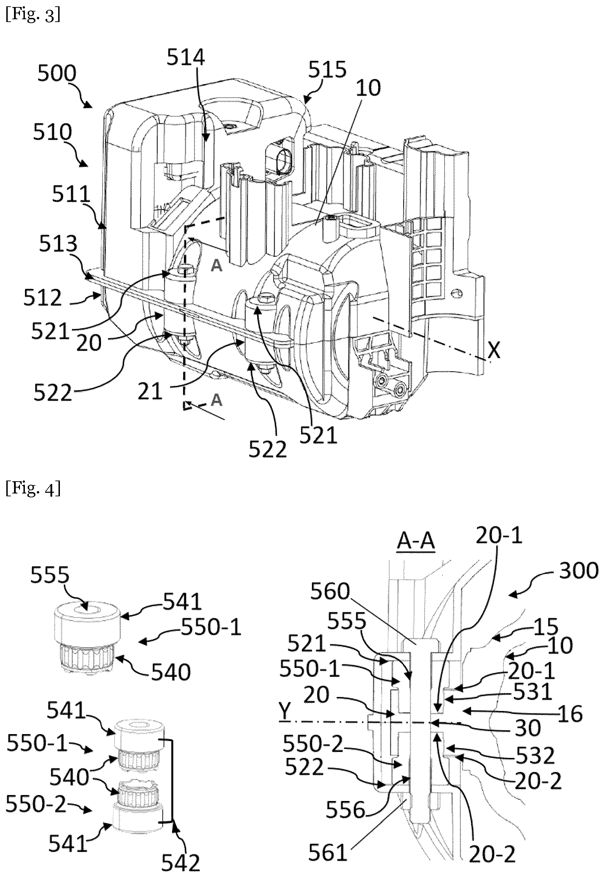

Figure 1 represents a compression unit 10 of a heat pump module according to the invention. The compression unit 10 is the part of the heat pump module that compresses air or a refrigerant and discharges it under a pressurized state. For this purpose, the compression unit typically comprises an inlet port and an outlet port for the circulation of the fluid inside the compression unit. It comprises various other parts that will not be detailed here as they are common parts of a compression unit. In this document, the compression unit 10 is defined as an element as a whole delimited by its outer surface 15. The outer surface 15 of the compression unit 15 may be in aluminum. This outer surface 15 can be defined as forming the walls of the compression unit 10. The compression unit 10 is intended to be accommodated into a two-part casing as it will be detailed in figure 3, said casing being intended to be attached to a vehicle, namely to the chassis of the vehicle.

According to the invention, the compression unit 10 of the heat pump module of the invention comprises N mount legs 20, 21, 22. N is a natural number greater than or equal to two, preferably greater than or equal to three. As it is represented in figure 1, N is equal to three: two mount legs 20, 21 are disposed on one side of the compression unit 10 and one mount leg 22 is disposed on the either side of the compression unit 10. As a variant, N may be equal to four with two mount legs on each side of the compression unit 10.

Each mount leg extends outwardly from the outer surface 15 of the compression unit 10. The mount legs 20, 21, 22 are advantageously in the same material as the outer surface 15 of the compression unit 10 (for example aluminum). This renders the step of manufacturing of the compression unit 10 easy to adapt as the inclusion of the mount legs only needs an adaptation of the mould used for obtaining the outer surface 15. The mount legs and the outer surface 15 of the compression unit 10 can therefore be a monolithic part or the mount legs can be added and fixed to the outer surface. For robustness reason, the variant of a monolithic part is preferred.

The compression unit 10 extends according to a first axis X. Even if it does not limit the scope of the invention, an example of the outer surface 15 of the compression unit 10 that may be cited for the sake of understanding is an outer surface 15 that comprises a hollow cylinder having the first axis X as a revolution axis. It appears obvious for a person skilled in the art that the hollow cylinder is intended to lodge the various parts of the compression unit ensuring the compression of the fluid to be compressed.

The mount legs 20, 21, 22 extend outwardly from the outer surface 15 of the compression unit 10. In the case of a cylindrical outer surface 15, the mount legs 20, 21, 22 extend according to a second axis Y perpendicular to the first axis X. Each mount leg forms a local extension of the outer surface 15. A mount leg is therefore to be understood as a piece of external surface 15 extending in a secant, advantageously perpendicular, manner locally to the outer surface 15, and more precisely secant (or perpendicular) to the zone of origin of the mount leg.

Each mount leg comprises an upper surface and a lower surface. The mount leg 20 comprises the upper surface 20-1 and the bottom surface 20-2. The mount leg is a three-dimensional structure having two surfaces delimiting the three-dimensional structure. These two surfaces are the upper surface and the lower surface. They are advantageously parallel to each other, as it will appear clearly further on with the description of the heat pump module. Nevertheless, it can be noted that the invention may also apply to other configurations of mount legs having non-parallel upper and lower surfaces.

As shown in figure 1, the mount leg 21 comprises the upper surface 21-1 and the bottom surface 21-2.

Before entering into more details in the description of the main aspects of the invention, it may be mentioned at this stage of the description that the heat pump module of the invention comprises an envelope 510, as shown in figure 3. The envelope 510 is a two-part casing. The envelope 510 comprises an upper casing 511 and a bottom casing 512 joining each other along a contact surface 513 and defining an internal area 514. In other words, the internal area 514 is delimited by an external surface 515 of the envelope 510. The compression unit 10 is disposed in the internal area 512.

In an optional feature of the invention, the upper casing 511 and the bottom casing 512 are made of plastic. Such casings are light-weight casings. On top of that, a casing in plastic is easy to produce thanks to processes like injection moulding. Such processes offer the possibility of enabling various forms for the casing by adapting the form of the mould.

The upper casing 511 and the bottom casing 512 form the envelope 510 that encapsulates the compression unit 10. The envelope 510 is therefore both an accommodation and a protective shell for the compression unit 10.

As represented in figure 3, the contact surface 513 extends in one plane. This is an embodiment of the invention but other variants are conceivable. For example, the contact surface 513 may be of the type of a curved surface, or the contact surface 513 may extend in more than one plane depending on the form of the upper and lower casings.

In a similar way, the contact surface 513 is extending horizontally. It is to be underlined that the invention also applies to a contact surface extending vertically, or in an inclined plane, which would be mean the upper casing 511 and the bottom casing 512 are located on either side of an horizontal plane, or an inclined plane.

As explained below, the main features of the invention lie in the relative positioning of the mount legs, decoupling elements and the envelope. These features apply to any geometrical forms of the casings of the envelope.

The following applies similarly to the N mount legs but will be described in regards to the mount leg 20. When the compression unit 10 is disposed inside the envelope 510, the upper surface 20-1 of the mount leg 20 is facing a lower surface 521 of the upper casing 511 and the bottom surface 20-2 of the mount leg 20 is facing a top surface 522 of the bottom casing 512.

According to the invention, the heat pump module 500 comprises, for each of the N mount legs 20, 21, 22, one decoupling element 550, 551 extending between said mount leg 20, 21, 22 and the envelope 510. This disposition is represented in figure 1 as a partly exploded view.

It results that at least two, preferably three mount legs 20, 21, 22 extend from the outer surface 15 of the compression unit 10. The upper casing 511 and the bottom casing 512 encapsulate the compression unit 10. It means that the upper casing 511 and the bottom casing 512 encapsulate the whole outer surface 15, including the mount legs. This encapsulation means that the upper surface 20-1 is, as represented in figure 3, under the lower surface 521 of the upper casing 511 and the bottom surface 20-2 is above the top surface 522 of the bottom casing 512. And in between, one decoupling element 550 is disposed. Once the envelope 510 is closed, there is a superposition of layers, starting from the lower side of the heat pump module: the top surface 522, a part of the decoupling element 550, the mount leg 20, a part of the decoupling element 550, the lower surface 521. The decoupling element 550 is in contact with the mount leg 20, on each side of the mount leg, and with both casings of the envelope 510. It results that the mount leg 20, part of the compression unit 10, is not in contact with the envelope 510. The decoupling element 550 is pressed between the mount leg 20 and the upper casing 511 and the lower casing 512. Preferably, the decoupling element 550 is made, at least partly, of an elastomer material, for example rubber. The decoupling element 550 absorbs the vibrations issued from the compression unit 10. These vibrations are not further transmitted to the envelope 510. The decoupling element 550 is also able to absorb vibrations originating from the exterior, for example from the vehicle when driving on a road having a surfacing of bad quality. It follows that the decoupling elements take the mechanical stress undergone by the heat pump module.

Thanks to the combination of the mount legs and the decoupling elements, the compression unit 10, even if accommodated inside the envelope 510, is physically isolated from the envelope 510. It means that the compression unit 10 is not in direct contact with the envelope 510. The decoupling elements ensure the positioning of the compressor unit 10 inside the envelope 510 as they occupy the space left between the mount legs and the upper and lower casings.

Another advantage of the invention results from the positioning of the mount legs. As they are extending from the outer surface 15 of the compression unit 10 and decoupling elements are associated to their upper and lower surfaces, the decoupling elements are not directly in contact with the outer surface of the compression unit 10, i. e. they are in a less critical area in terms of temperature. It contributes to a longer lifetime of the decoupling elements.

Figure 2 represents the compression unit of figure 1 with an acoustic layer 300 according to the heat pump module of the invention.

According to an optional feature of the invention, the heat pump module 500 comprises an acoustic layer 300, typically 15 to 30 mm thick and for example made of foam, disposed between the compression unit 10 and the envelope 510. Interleaving the acoustic layer 300 between the compression unit 10 and the envelope 510 avoids any direct contact between the compression unit 10 and the envelope 510. The acoustic layer 300 contributes to decrease the noise from the compression unit 10 by absorbing the high frequencies emitted by the compression unit 10.

Preferably, the acoustic layer 300 is press fitted onto the compression unit 10. In other words, the acoustic layer is shaped like the compression unit 10. Therefore the acoustic layer is contoured to closer match the shape of the compression unit 10. So configured, the acoustic layer 300 is placed at the closest from the vibration source to better decrease the resulting noise.

The acoustic layer 300 comprises N apertures 301 through which the N mount legs 20, 21, 22 extend. If the compression unit 10 comprises three mount legs, the acoustic layer 300 comprises three apertures 301.

As depicted in figure 2 (and to be considered together with figure 3), the mount leg 20 goes through one of the apertures 301 and the mount leg 21 goes through another aperture 301. The mount leg 20 is associated with the decoupling element 550. The decoupling element 550 comprises a first decoupling part 550-1 pressed between the upper surface 20-1 and the lower surface 521 of the upper casing 511. The decoupling element 550 also comprises a second decoupling part 550-2 being pressed against the bottom surface 20-2 and the top surface 522 of the bottom casing 512.

Similarly, the mount leg 21 is associated with the decoupling element 551. The decoupling element 551 comprises a first decoupling part 551-1 pressed between the upper surface 21-1 and the lower surface 521 of the upper casing 511. The decoupling element 551 also comprises a second decoupling part 551-2 being pressed against the bottom surface 21-2 and the top surface 522 of the bottom casing 512.

Figure 3 represents a heat pump module 500 of the invention and was already partly described. The heat pump module 500 comprises the compression unit 10 (only indicated but not visible), the envelope 510 (comprising the upper casing 511 and the bottom casing 512) encapsulating the compression unit 10.

The lower surface 521 of the upper casing 511 and the top surface 522 of the bottom casing 512 are shown. The height between the lower surface 521 and the top surface 522 is the height in which the decoupling part 550-1 and 550-2 and the mount leg 20 are contained. This is particularly visible in figure 4.

Figure 4 represents a cut view of a part of the heat pump module 500 of the invention. On the right hand side of the figure, the cut view A-A relating to the plane indicated in figure 3 is shown. It corresponds to the cut view of the heat pump module 500 according to a plane perpendicular to the first axis X and intersecting the mount leg 20.

The outer surface 15 of the compression unit 10 is partly represented. The outer surface 15 comprises a portion 16 from which the mount leg 20 extends. As can be seen, the mount leg 20 extends according to the second axis Y which is perpendicular to the portion 16. However, the principle of the invention can apply similarly to a mount leg extending according to an axis secant to the portion 16.

The mount leg 20 comprises the upper surface 20-1 and the lower surface 20-2.

The first decoupling part 550-1 extends from the upper surface 20-1 to the lower surface 521 of the upper casing. The second decoupling part 550-2 extends from the bottom surface 20-2 to the top surface 522 of the bottom casing. The superposition of the decoupling parts 550-1, 550-2 and the mount leg 20 between the lower surface 521 and the top surface 522 results in the fact that the decoupling parts 550-1, 550-2 are trapped between the envelope 510 and the mount leg 20. As the decoupling part is at least made of an elastomer material, such as rubber, it can be compressed. The vibrations of the compression unit 10 pass through the mount leg 20 and are absorbed by the decoupling parts 550-1, 550-2.

As represented, the mount leg 20 comprises blind hole 531 opening onto the upper surface 20-1 and a blind hole 532 opening onto the bottom surface 20-2. The blind hole 531 accommodates the first decoupling part 550-1, and the blind hole 532 accommodates the second decoupling part 550-2. The decoupling parts are press-fitted in their blind hole.

Each of the first decoupling part 550-1 and the second decoupling parts 550-2 comprises a body 540 and a head 541. The head 541 is connected to the body 540. The head 541 and the body 540 may form a single piece or they can be two separate pieces, the head being disposed on the body and disposed in their position before closing the envelope 510. For the ease of assembly of the heat pump module, the head 541 and the body are preferably under the form of a single piece.

The body 540 of the first decoupling part 550-1 extends in the blind-hole 531 and the head 541 is compressed between the envelope 510 (more precisely the lower surface 521) and the surface 20-1 onto which the blind-hole 531 opens. Similarly, the body 540 of the second decoupling part 550-2 extends in the blind-hole 532 and the head 541 is compressed between the envelope 510 (more precisely the top surface 522) and the surface 20-2 onto which the blind-hole 532 opens.

According to an optional feature of the invention, the body 540 is in an elastomer material, for example rubber, and the head 541 is in metal or an elastomer material, for example rubber. In case of a blind-hole, the head serves both to absorb vibrations from the compression unit 10 and to abut the decoupling part 550-1 against the mount leg 20. The decoupling part 550-1 stays therefore in position whatever the level of vibrations to which it is subject.

In the embodiment presented in figure 4, and according to an optional feature of the invention, the mount leg 20 comprises a channel 30 extending from the upper surface 20-1 to the bottom surface 20-2 of said mount leg 20. The channel 30 is a through-hole of the mount leg 20. Each of the first and second decoupling parts 550-1, 550-2 comprises a through-hole 555, 556.

And each of the lower surface 521 of the upper casing 511 and the top surface 522 of the bottom casing 512 comprises one opening. The opening is a through-hole of said surfaces, said surfaces being to be understood as the portions of the wall of the envelope 510 facing the mount leg 20.

The heat pump module 500 comprises fixation means 560 inserted through the channel of the mount leg 20, the through-hole of the first and second decoupling parts 550-1, 550-2 and the openings of the he lower surface 521 of the upper casing 511 and the top surface 522 of the bottom casing 512. The fixation means 560 may be a screw. It enables to fix the upper casing 511, the bottom casing, the decoupling elements and the mount leg 20 together. The fixation means 560 is coupled to a nut 561 to both fix the casings, the decoupling parts and the mount leg in their superposition the one on each other and to apply a compression force on this superposition to ensure the right closure of the envelope 510 and the compression of the decoupling parts between the mount leg 20 and the facing surface 521, 522.

On the left hand side of figure 4, embodiments of the decoupling element 550 are represented. On the upper part, the decoupling part 550-1 is represented as a single piece: the head 541 extends from the body 540. Each part has a cylindrical form. Such a decoupling part is configured to be inserted into a blind-hole. Of course, the diameter of the body is almost identical to the diameter of the blind-hole. As the decoupling part 550-1 is compressed against the mounted leg 20, and due to the material of the decoupling part 550-1, the diameter of the body might be equal to the diameter of the blind-hole. The height of the body 540 is equal to the width of the blind-hole. A person skilled in the art knows how to dimension such an element to be inserted into a blind-hole.

The head 540 has a diameter greater than the diameter of the body 541. The diameter of the head 540 is greater than the diameter of the blind-hole. Indeed, a contact surface between the head and the upper surface 20-1 of the mount leg 20 is required for the decoupling part 550-1 to be in the right position.

On the lower side of the left hand side of figure 4, a decoupling element 550 is represented. It comprises a first decoupling part 550-1 and a second decoupling part 550-2, each of the decoupling part being identical to the decoupling part described above. In this embodiment, the first and the second decoupling parts are linked to each other by an arm 542. Advantageously, the arm 542 is flexible to enable to temporarily increase the distance between both decoupling parts, when installing the decoupling parts of said decoupling element 550 in the blind-holes of the mount leg 20.

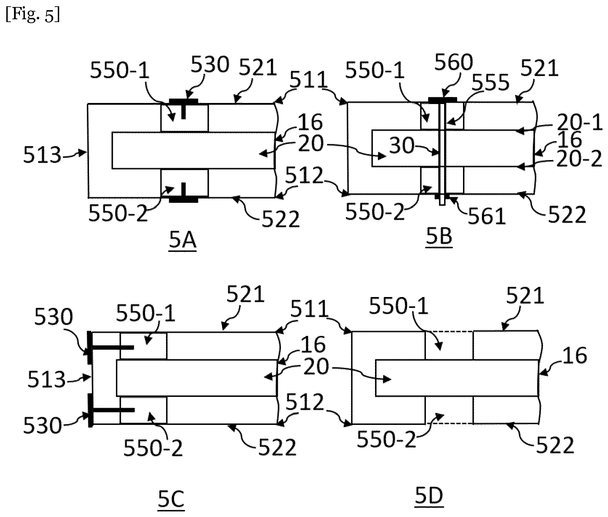

Figure 5 schematically represents four variants of decoupling elements of the heat pump module of the invention. For the sake of readability of the figure, the mount leg 20 is represented as a long plate. It means that the mount leg, the decoupling element and the casings are not at scale and should therefore not be understood as limiting the scope of the invention.

As a reminder, a decoupling element comprises a first decoupling part 550-1 and a second decoupling part 550-2. The first decoupling part 550-1 is disposed on one side of the mount leg 20 and the second decoupling part 550-2 is disposed on the other side of the mount leg 20.

In the variant represented in the upper part of the figure, on the left hand side (variant 5A), the first decoupling part 550-1 is fixed to the lower surface 521 of the upper casing 511 and the second decoupling part 550-2 is fixed to the top surface 522 of the bottom casing 512. Each decoupling part is rigidly fixed to the surface of the envelop with which it is in contact. The decoupling part is compressed between the envelope 510 and the mount leg 20. The decoupling parts stay in position once the heat pump system is assembled. The fixing means 530 used to fix the decoupling part with the casing may be a screw vertically inserted into the decoupling part. This fixing arrangement results in exerting the clamping forces applied on the decoupling parts according to the same axis, each clamping force being oriented towards the mount leg. The compression unit 10, having mount legs on each side, is therefore maintained in position within the internal area 512 of the envelope 510.

The variant represented in the upper part of the figure, on the right hand side (variant 5B) corresponds to the variant detailed in figure 4 and will not be described again.

In the variant represented in the lower part of the figure, on the left hand side (variant 5C), the first decoupling part 550-1 is fixed to the lower surface 521 of the upper casing 511 and the second decoupling part 550-2 is fixed to the top surface 522 of the bottom casing 512. Each decoupling part is rigidly fixed to the surface of the envelop with which it is in contact. As for the variant 5A, the decoupling part is compressed between the envelope 510 and the mount leg 20. The decoupling parts stay in position once the heat pump system is assembled. As a difference, the fixing means 530 used to fix the decoupling part with the casing may be a screw horizontally inserted into the decoupling part. This fixing arrangement results in exerting the clamping forces applied on the decoupling parts according to parallel axis. Due to the application of lateral clamping forces, it is preferable to consider such an arrangement with four mount legs, two on each side of the compression unit 10.

In the variant represented in the lower part of the figure, on the right hand side (variant 5D), the decoupling parts 550-1, 550-2 are overmolded in the envelope 510. Overmolding is an injection molding process to manufacture items made of two materials of different kinds, at the same time, on the same press and in the same mold. The decoupling parts 550-1 respectively 550-2 therefore extends from the lower surface 521 of the upper casing 511, respectively from the top surface 522 of the bottom casing 512. It renders the assembly of the heat pump module easy to perform as it is only required to join the upper casing 511 and the bottom casing 512. The upper casing 511 and the bottom casing 512 are then fixed together, either by applying the principle of fixation according to one of the variant 5A, 5B or 5C, or by any other traditional fixation means.

The invention was mainly explained based on the description of the mount leg 20. The same applies to the other mount legs, that is to say to mount legs 21 and 22. As already said, the compression unit 10 of the invention may comprise more than three mount legs. It comprises two mount legs at least, preferably three mount legs, to ensure two, respectively three points of support for the compression unit 10. The position of the compression unit 10 is fixed and stable inside the envelope 510 thanks to the mount legs and the decoupling elements associated to each mount leg.

In an optional feature of the invention, the heat pump module 500 according to the invention may further comprise external decoupling elements connected to the envelope 510 and the chassis of the vehicle in which the heat pump module is intended to be installed. The external decoupling elements may be realized in an elastomer material, for example a soft rubber. Such external decoupling elements contribute decreasing the noise from the compression unit 10 by absorbing the low frequencies emitted by the compression unit 10.

Of course, the invention is not limited to the examples which have just been described and numerous adjustments can be made to these examples without departing from the scope of the invention. In particular, the characteristics of different variant embodiments of the invention can be combined to achieve the invention, to the extent that these variants are not incompatible with each other.

## Claims

1. Heat pump module (500) for a vehicle, **characterized in that** it comprises:
- an envelope (510) comprising an upper casing (511) and a bottom casing (512) joining each other and defining an internal area (514),
- a compression unit (10) disposed in the internal area (514), comprising N mount legs (20, 21, 22), each extending outwardly from an outer surface (15) of the compression unit (10) and comprising an upper surface (20-1; 21-1) facing a lower surface (521) of the upper casing (511) and a bottom surface (20-2; 21-2) facing a top surface (522) of the bottom casing (512), N being a natural number greater than or equal to three,
- for each of the N mount legs (20, 21, 22), one decoupling element (550, 551), preferably at least partly made of an elastomer material, extending between said mount leg (20, 21, 22) and the envelope (510).

2. Heat pump module (500) according to claim 1, further comprising an acoustic layer (300), typically 15 to 30 mm thick, disposed between the compression unit (10) and the envelope (510), said acoustic layer being preferably press fitted onto the compression unit, said acoustic layer (300) comprising N apertures (301) through which the N mount legs (20, 21, 22) extend.

3. Heat pump module (500) according to claim 1 or 2, wherein each decoupling element (550, 551) comprises a first decoupling part (550-1; 551-1) pressed between the upper surface (20-1; 21-1) and the lower surface (521) of the upper casing (511) and a second decoupling part (550-2; 551-2) being pressed against the bottom surface (20-2; 21-2) and the top surface (522) of the bottom casing (512).

4. Heat pump module (500) according to claim 3, comprising fixation means (530) arranged to secure each decoupling part (550-1, 551-1, 550-2, 551-2) to the envelope (510).

5. Heat pump module (500) according to claim 3, wherein at least one of the N mount legs (20, 21, 22) comprises, for each of its upper surface (20-1, 21-1) and bottom surface (20-2, 21-2), a blind hole (531, 532) opening onto said surface (20-1, 21-1; 20-2, 21-2), each of the blind hole accommodating either the first decoupling part (550-1, 551-1) or the second decoupling part (550-2, 551-2) press-fitted in said blind hole.

6. Heat pump module (500) according to claim 5, wherein each of the first and second decoupling parts (550-1, 551-1, 550-2, 551-2) comprises a body (540) and a head (541) connected to the body (540), the body (540) extending in the blind-hole (531, 532) in which said decoupling part is accommodated and the head (541) being compressed between the envelope (510) and the surface (20-1, 21-1, 20-2, 21-2) onto which said blind-hole (531, 532) opens.

7. Heat pump module (500) according to claim 6, wherein the body (540) is in an elastomer material and the head (541) is in metal or an elastomer material.

8. Heat pump module (500) according to claim 3, wherein the first decoupling part (550-1, 551-1) is fixed to the lower surface (521) of the upper casing (511) and the second decoupling part (550-2, 551-2) is fixed to the top surface (522) of the bottom casing (512).

9. Heat pump module (500) according to claim 8, wherein the decoupling parts (550-1, 550-2) are overmolded in the envelope (510).

10. Heat pump module (500) according to claim 3, wherein:
- at least one of the N mount legs (20, 21, 22) comprises a channel (30) extending from the upper surface (20-1; 21-1) to the bottom surface (20-2; 21-2) of said mount leg (20, 21, 22),
- each of the first and second decoupling parts (550-1, 551-1, 550-2, 551-2) comprises a through-hole (555, 556),
- each of the lower surface of the upper casing and the top surface of the bottom casing, comprises one opening,
and the heat pump module (500) comprises, for said at least one of the N mount legs (20, 21, 22), fixation means (560) inserted through the channel of said mount leg, the through-hole of the first and second decoupling parts and the openings of the he lower surface of the upper casing and the top surface of the bottom casing, so as to fix the upper casing, the top surface, the decoupling elements and said mount leg (20, 21, 22) together.
